# EUROPEAN PATENT SPECIFICATION

(11) **EP 1 977 801 B1**
(45) Date of publication and mention of the grant of the patent: **14.08.2013**
(21) Application number: 06834894.5
(22) Date of filing: 18.12.2006
(51) Int. Cl.: A63F 13/10, G06T 15/60

(54) **GAME MACHINE, GAME MACHINE CONTROL METHOD, AND INFORMATION STORAGE MEDIUM**
SPIELAPPARAT, SPIELAPPARATAUSSTEUERUNG UND INFORMATIONSPEICHERMEDIUM
MACHINE DE JEU, TECHNIQUE DE COMMANDE DE CETTE MACHINE ET SUPPORT DE STOCKAGE D'INFORMATIONS

(30) Priority: 26.01.2006 JP 2006018104
(43) Date of publication of application: 08.10.2008
(73) Proprietor: Konami Digital Entertainment Co., Ltd., Tokyo 107-8324 (JP)
(72) Inventor: TANAKA, Toshiyuki, Minato-ku, Tokyo 1078324 (JP)
(74) Representative: Winter, Brandl, Fürniss, Hübner, Röss, Kaiser, Polte - Partnerschaft
(86) International application number: PCT/JP2006/325182
(87) International publication number: WO 2007/086208

(56) References cited:
- WO-A-03/017204
- JP-A- 9 047 576
- JP-A- 2001 101 445
- JP-A- 2003 331 313
- US-B1- 6 437 782
- YOSSARIAN KING: "Ground-plane shadows" GAME PROGRAMMING GEMS, 2000, pages 562-566, XP002512257 Massachusetts, USA
- FOLEY J D ET AL: "COMPUTER GRAPHICS: PRINCIPLES AND PRACTICE , PASSAGE", 1 January 1996 (1996-01-01), COMPUTER GRAPHICS. PRINCIPLES AND PRACTICE, READING, ADDISON WESLEY, US, PAGE(S) 741 - 744, XP002268884,
- FOLEY J D ET AL: "Computer Graphics: Principles and Practice; Illumination and Shading", 1 January 1996 (1996-01-01), COMPUTER GRAPHICS. PRINCIPLES AND PRACTICE, READING, ADDISON WESLEY, US, PAGE(S) 721 - 741, XP002353554,

## Description

The present invention relates to a game machine, a game machine control method, and an information storage medium.

JP-A- 2005-342120 discloses a game machine which displays a picture obtained by viewing, from a predetermined viewpoint, a virtual three dimensional space where a field object representative of a ground surface and so forth and various objects representative of game characters and so forth placed on the field object are placed. The game machine carries out a so-called three dimensional game.

In the above described game machine, by rendering a picture in which the light from the light source provided in the virtual three dimensional space causes the shadows of the various objects on the field object, and the shadow varies according to a change in the position of the light source, the shape (posture) of the object, and so forth, the reality of the game can be improved. In order to realize such shadow rendering, there is a method available according to which the entire field object is divided beforehand into polygons which are fine enough to express the shadow of the object and the brightness of the vertexes of the polygons forming the field object are changed according to a change in the position of the light source, the state of the object, and so forth. However, dividing the entire field object into fine polygons results in an enormous amount of data. There is another method available according to which only a part of the field object is divided into fine polygons. With this method, however, the above described shadow rendering can be realized only at that part.

US 6 437 782 B1 discloses a method for generating shadows with blended transparency, wherein a shadow of a model is projected onto a shadow plane using a shadow projection matrix and disabling alpha blending, creating a projected shadow model. A three-dimensional bounding volume of the model is projected onto the shadow plane and clipped against the view frustum. Based on the bounding volume projected onto the shadow plane, a screen extent that encompasses the entire projected bounding volume is determined. A texture map sized in relation to the screen extent is created in a memory for storing a texture map. This texture map is cleared to a non-shadow colour and a chromakey is set to the non-shadow colour. The projected shadow model without alpha blending has its colours and texture set to the desired shadow colour. The projected shadow model is then rendered onto the texture map. Thereafter, the projected bounding volume vertices are set to the shadows alpha value and the texture coordinate of the projected bounding volume vertices are set to evenly map texture into screen space. With prospective texture correction disabled and blended transparency enabled, the projected bounding volume is rendered into the scene with the shadow texture applied.

JP 09 047576 A discloses a game machine for showing a game screen image showing a picture obtained by viewing, from a predetermined view point, a virtual three dimensional space where a light source, a first object and a second object located on the first object are placed. The game machine comprises means for rendering a shadow of the second object over a part of the first object. A translucent arithmetic part calculates calculates transparency. A false shadow model is employed, and texture information is defined by peaks.

The present invention has been conceived in view of the above, and one of the objects thereof is to provide a game machine, a game machine control method, and an information storage medium for showing a picture in which the light from a light source causes the shadow of an object, and the shadow varies according to a change in the position of the light source, the shape (posture) of the object; and so forth, while suppressing an increase of the data amount.

In order to achieve the above described object, according to one aspect of the present invention, there is provided a game machine as defined in claim 1.

According to another aspect of the present invention, there is provided a control method as defined in claim 5.

According to another aspect of the present invention, there is provided a computer readable information storage medium as defined in claim 6. A computer may include a consumer game machine, a portable game machine, a commercial game machine, a portable phone, a personal digital assistant (PDA), a personal computer, and so forth, to function as a game machine.

The present invention relates to a game machine for showing a game screen image showing a picture obtained by viewing, from a predetermined viewpoint, a virtual three dimensional space where a light source, a first object, and a second object located on the first object are placed. In the present invention, a shadow rendering object for rendering the shadow of the second object is placed overlapping a part of the first object, the part being determined based on the position of the second object. The alpha value, i.e. permeability of each of the vertexes of the polygons forming the shadow rendering object is determined based on the position of the light source and the position and shape data of the second object. Then, a game screen image is produced based on the alpha value determined, and displayed. Here, the "first object" refers to an object representative of a ground surface, a floor, and so forth, while the "second object" refers to an object representative of a game character and so forth, for example. According to the present invention, a picture in which the light from the light source causes the shadow of the second object on the first object and the shadow varies according to a change in the position of the light source, the shape (posture) of the second object, and so forth can be shown while suppressing an increase in the data amount.

In one embodiment of the present invention, the shadow rendering object placing means may place the shadow rendering object, based on the positions of the light source and the second object. According to the present invention, a s'mall shadow rendering object is usable.

In another embodiment of the present invention, the alpha value determination means may include means for determining the alpha value, i.e. permeabilityor brightness of each of the vertexes of the polygons forming the shadow rendering object, based on a distance between the vertex and the position of the second object. For example, a light source in a low position may result in the shadow of the second object being too long to be fully included in the shadow rendering object. In such a case, the shadow of the character object 44 appears incomplete, which may give the player some sense of discomfort. According to the present invention, giving such sense of discomfort to the player can be avoided.

In still another embodiment of the present invention, the shadow rendering object placing means may change the size of the shadow rendering object, based on the positions of the light source and the second object. For example, a light source in a low position may result in the shadow of the second object being too long to be fully included in the shadow rendering object. In such a case, the shadow of the character object 44 appears incomplete, which may give the player some sense of discomfort. According to the present invention, it is possible to prevent the shadow of the second object from becoming too long to be fully included in the shadow rendering object, and therefore to avoid giving such a sense of discomfort to the player.

### BRIEF DESCRIPTION OF THE DRAWINGS

Fig. 1 is a diagram showing a hardware structure of a game machine according to an embodiment of the invention;
Fig. 2 is a diagram showing one example of a virtual three dimensional space;
Fig. 3 is a diagram showing one example of a shadow rendering object;
Fig. 4 is a diagram showing one example of a polygon number control table;
Fig. 5 is a flowchart of a main process to be carried out by the game machine;
Fig. 6 is a flowchart of a process relevant to the shadow rendering object;
Fig. 7 is a diagram showing one example of the shadow rendering object;
Fig. 8 is a diagram showing one example of the virtual three dimensional space;
Fig. 9 is a diagram showing an entire structure of a program distribution system according to another embodiment of the present invention.

### DESCRIPTION OF EMBODIMENTS

In the following, one example of an embodiment of the present invention will be described in detail with reference to the accompanying drawings.

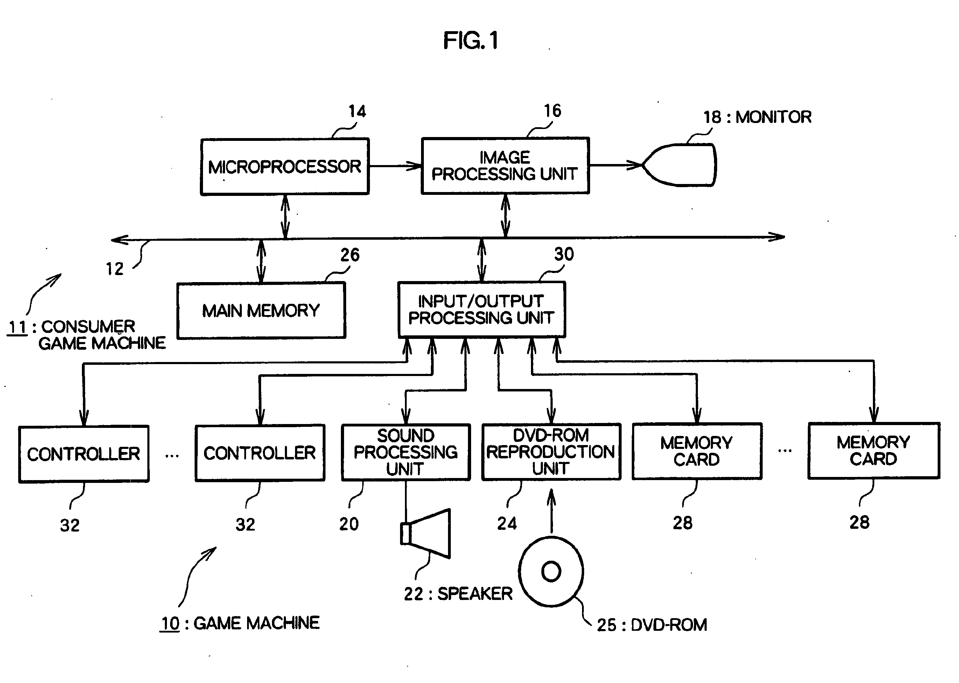

Fig. 1 is a diagram showing a hardware structure of a game machine according to an embodiment of the present invention. The shown game machine 10 comprises a consumer game machine 11 having a DVD-ROM 25 and a memory card 28, or information storage media, mounted thereto and a monitor 18 and a speaker 22 connected thereto. For example, the monitor 18 may be a home-use television set receiver, and the speaker 22 may be a built-in speaker thereof.

The consumer game machine 11 is a publicly known computer game system comprising a bus 12, a microprocessor 14, an image processing unit 16, a sound processing unit 20, a DVD-ROM reproduction unit 24, a main memory 26, an input/output processing unit 30, and a controller 32. The respective structural elements other than the controller 32 are accommodated in an enclosure.

The bus 12 is used for exchanging an address and/or data among the respective units of the consumer game machine 11. The microprocessor 14, the image processing unit 16, the main memory 26, and the input/output processing unit 30 are mutually connected via the bus 12 for data exchange.

The microprocessor 14 controls the respective units of the consumer game machine 11, based on an operation system stored in a ROM (not shown), a program read from the DVD-ROM 25, and data read from the memory card 28. The main memory 26 comprises a RAM, for example, into which a program read from the DVD-ROM 25 and/or data read from the memory card 28 is written when required. The main memory 26 is also used as a working memory of the microprocessor 14.

The image processing unit 16, which comprises a VRAM, renders a game screen image into the VRAM, based on the image data received from the microprocessor 14, then converts the content of the rendered game screen image into a video signal, and outputs the video signal to the monitor 18 at a predetermined timing.

The input/output processing unit 30 is an interface via which the microprocessor 14 accesses the sound processing unit 20, the DVD-ROM reproduction unit 24, the memory card 28, and the controller 32. The sound processing unit 20, the DVD-ROM reproduction unit 24, the memory card 28, and the controller 32 are connected to the input/output processing unit 30.

The sound processing unit 20, which comprises a sound buffer, reproduces and outputs, via the speaker 22, various sound data, such as game music, game sound effects, a message, and so forth, read from the DVD-ROM 25 and stored in the sound buffer.

The DVD-ROM reproduction unit 24 reads a program from the DVD-ROM 25 according to an instruction sent from the microprocessor 14. It should be noted that although the DVD-ROM 25 is used here to provide a program to the consumer game machine 11, any other information storage medium, such as a CD-ROM, a ROM card, or the like, may be used instead. Alternatively, a program may be provided via a data communication network, such as the Internet or the like, from a remote place to the consumer game machine 11.

The memory card 28 comprises a nonvolatile memory (for example, EEPROM, or the like). The consumer game machine 11 has a plurality of memory card slots defined therein each for accepting a memory card 28 so that a plurality of memory cards 28 can be inserted into the consumer game machine 11 at the same time. The memory card 28 is removable from the slot and stores various game data, such as saved data or the like.

The controller 32 is a general purpose operation input means via which the player inputs various game operations. The input/output processing unit 30 scans the states of the respective units of the controller 32 in a constant cycle (for example, every 1/60^{th} of a second) and sends an operation signal about the scanning result to the microprocessor 14 via the bus 12. The microprocessor 14 determines the game operation carried out by the player, based on the operation signal. The consumer game machine 11 is adapted to connection to a plurality of controllers 32. The microprocessor 14 controls a game, based on the operation signals input from the respective controllers 32.

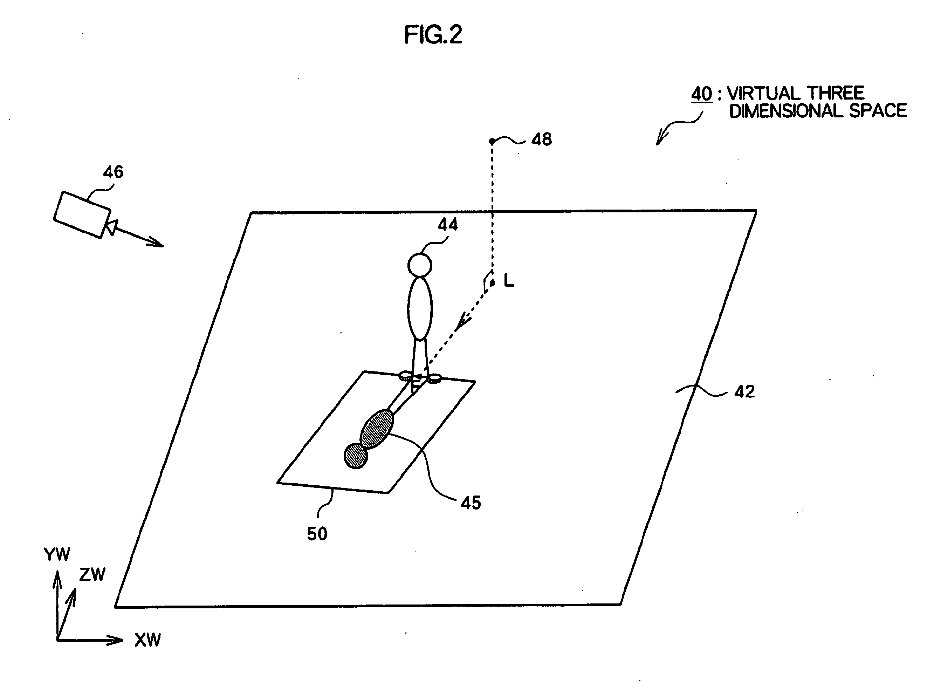

In the game machine 10, a virtual three dimensional space (a virtual three dimensional game space) is created in the main memory 26. Fig. 2 shows a part of the virtual three dimensional space created in the main memory 26. As shown, a field object 42 (a first object) is placed in the virtual three dimensional space 40. The field object 42 is an object representative of a ground surface, a floor, and so forth, for example. A character object 44 (a second object, or an object having a shadow) is placed on the field object 42. The state (including a position, a shape (posture), and so forth) of the character object 44 is changed according to an operation carried out relative to the controller 32, for example.

A virtual camera 46 is set in the virtual three dimensional space 40. A game screen image showing a picture obtained by viewing the virtual three dimensional space 40 from the virtual camera 46 is produced and displayed on the monitor 18.

A light source 48 is set in the virtual three dimensional space 40. In the following, a technique for preferably expressing a picture in which the light from the light source 48 causes the shadow 45 of the character object 44 on the field object 42 and the shadow 45 varies according to a change in the position of the light source 48, the state of the character object 44, and so forth, will be described.

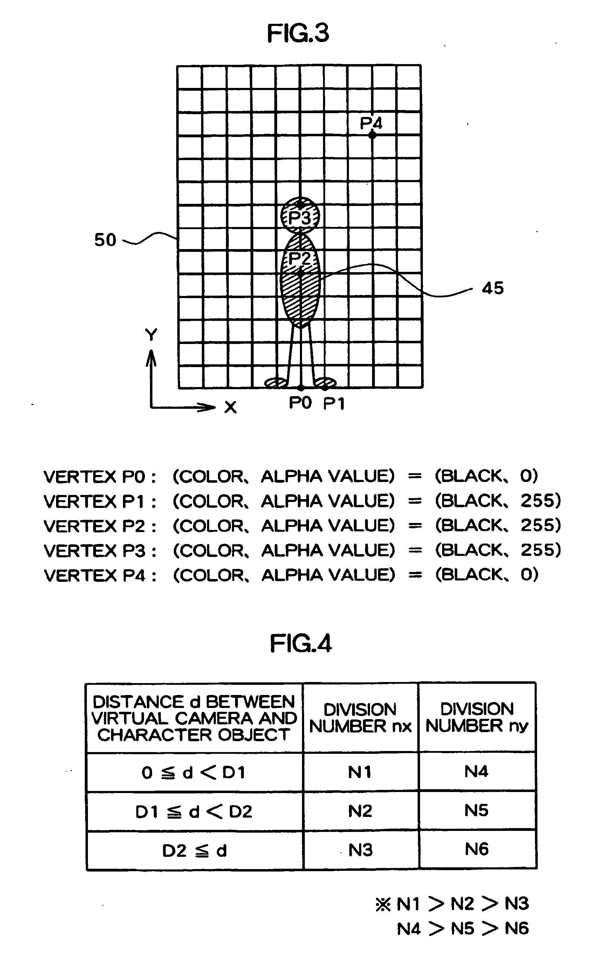

With the game machine 10, in order to express the shadow 45 of the character object 44, a shadow rendering object 50 is placed in the virtual three dimensional space 40. Fig. 3 shows one example of the shadow rendering object 50. The shadow rendering object 50 is a panel-like rectangular object smaller than the field object 42. The shadow rendering object 50 is divided into polygons which are fine enough to express the shadow 45 of the character object 44 and finer than those forming the field object 42. It should be noted that finer expression of the shadow 45 of the character object 44 requires the shadow rendering object 50 to be divided into finer polygons, and thus expression of the shadow 45 such as is shown in Fig. 3 requires the shadow rendering object 50 to be divided into finer polygons than those shown in Fig. 3.

The shadow rendering object 50 is placed overlapping a part of the field object 42, the part being determined based on the position of the character object 44. That is, the position at which to place the shadow rendering object 50 is determined based on the current position of the character object 44, and the shadow rendering object 50 moves according to movement of the character object 44. In this embodiment, the position in which to place the shadow rendering object 50 is determined such that the position of the representative vertex P0 of the shadow rendering object 50 coincides with the foot position F of the character object 44.

The orientation (posture) of the shadow rendering object 50 is determined based on the positions of the character object 44 and light source 48. In this embodiment, the orientation of the shadow rendering object 50 is determined such that the reference direction (the Y axial direction in Fig. 3 in this embodiment) of the shadow rendering object 50 coincides with the direction from the position L where the position of the light source 48 is orthogonally projected onto the field object 42 to the foot position F of the character object 44. That is, the orientation of the shadow rendering object 50 varies according to a change (change in the XW or ZW axial direction) in the relative positional relation between the character object 44 and the light source 48.

The shadow rendering object 50 may be placed floating slightly above the field object 42 or at the same height (the YW axial coordinates) as that of the field object 42. In the latter case, the game screen image is produced by first rendering the field object 42, then the shadow rendering object 50.

The colors (an RGB value, for example) of the respective vertexes of the polygons forming the shadow rendering object 50 are set as black (see the vertexes P0 to P4 in Fig. 3) . The alpha values (a semi-transparent combination rate, permeability) of the respective vertexes of the polygons forming the shadow rendering object 50 are determined based on the positions of the character object 44 and light source 48, and so forth. Specifically, an area on the shadow rendering object 50, where the shadow 45 of the character object 44 is to be rendered (the portion with diagonal lines in Fig. 3, hereinafter referred to as a shadow area) is specified according to a publicly known algorithm, such as shadow volume and so forth, based on the position of the light source 48 and the position and shape data of the character object 44 and so forth. Then, the alpha value of a vertex outside the shadow area (see vertexes P0 and P4 in Fig. 3) is defined as a first predetermined value (0 in this embodiment), while that of a vertex inside the shadow area (see vertexes P1 to P3 in Fig. 3) is defined as a second predetermined value (255 in this embodiment), or a value other than the first predetermined value. In this embodiment, it is arranged such that any integer between 0 and 255 can be defined as the alpha value of each of the vertexes of the polygons forming the shadow rendering object 50. The alpha value being 0 means "a thoroughly transparent state", while the alpha value being 255 means "an absolutely opaque state". That is, a larger alpha value results in less transparency.

With the above-described shadow rendering object 50 placed in the virtual three dimensional space 40, an image obtained by combining an image showing a picture obtained by viewing the field object 42 from the virtual camera 46, and an image showing a picture obtained by viewing the shadow rendering object 50 from the virtual camera 46, in a semi-transparent manner based on the alpha values set for the respective vertexes of the shadow rendering object 50, appears on the game screen. As a result, a picture in which the character object 44 having the shadow 45 formed by the light from the light source 48 so as to extend on the field object 42 is shown on the game screen. Further, a picture in which the shadow 45 of the character object 44 varies according to a change in the position of the light source 48, the state of the character object 44, and so forth is shown on the game screen as the position and orientation of the shadow rendering object 50 and the alpha values of the respective vertexes of the shadow rendering object 50 are changed according to a change in the state of the character object 44 and the light source 48.

It should be noted that in the game machine 10, the number of polygons forming the shadow rendering object 50 is changed based on the distance between the position of the character object 44 and the position (the viewpoint position) of the virtual camera 46.

Specifically, in the game machine 10, a polygon number control table, such as is shown in Fig. 4, for example, is stored, and the number of polygons forming the shadow rendering object 50 is changed based on the polygon number control table. As shown, the polygon number control table shows correspondence between the range of the distance d between the character object 44 and the virtual camera 46 and the number of polygons (the polygon number, or the division number) forming the shadow rendering object 50. In Fig. 4, the division number nx stands for the number (a polygon number) into which the shadow rendering object 50 is divided in the x axial direction (see Fig. 3), while the division number ny stands for the number (a polygon number) into which the the shadow rendering object 50 is divided in the Y axial direction (see Fig. 3). In the case of the shadow rendering object 50 shown in Fig. 3, for example, the division number nx is ten, while the division number ny is fourteen. The polygon number control table is defined such that the longer distance d results in the smaller division numbers nx and ny. That is, with the distance between the character object 44 and the virtual camera 46 becoming longer, the shadow 45 of the character object 44 appears so much smaller on the game screen that the roughly drawn shadow 45 of the character object 44 may not cause any problem with appearance. That is, a longer distance between the character object 44 and the virtual camera 46 can reduce the number of polygons forming the shadow rendering object 50 without causing a problem with appearance. The polygon number control table is defined such that the longer the distance between the character object 44 and the virtual camera 46 results in the fewer polygons forming the shadow rendering object 50. Alternatively, the division numbers nx and ny may be calculated through a predetermined calculation based on the distance d between the character object 44 and the virtual camera 46. In this arrangement, the polygon number control table is unnecessary. The number of polygons forming the shadow rendering object 50 may be changed as described above.

As the number of polygons forming the shadow rendering object 50 is changed based on the distance between the character object 44 and the virtual camera 46 in the game machine 10, as described above, for a case in which the distance between the character object 44 and the virtual camera 46 is relatively short, that is, when the shadow 45 of the character object 44 appears relatively large on the game screen, the shadow rendering object 50 is divided into finer polygons. In this case, a fine shadow 45 is shown for the character object 44 on the game screen. Meanwhile, for a case in which the distance between the character object 44 and the virtual camera 46 is relatively long, that is, when the shadow 45 of the character object 44 appears relatively small on the game screen, the shadow rendering object 50 is divided into rough polygons. In this case, the shadow 45 of the character object 44 is not finely expressed on the game screen, so that a processing load in connection with the shadow rendering can be reduced.

Here, a process to be carried out by the game machine 10 will be described.

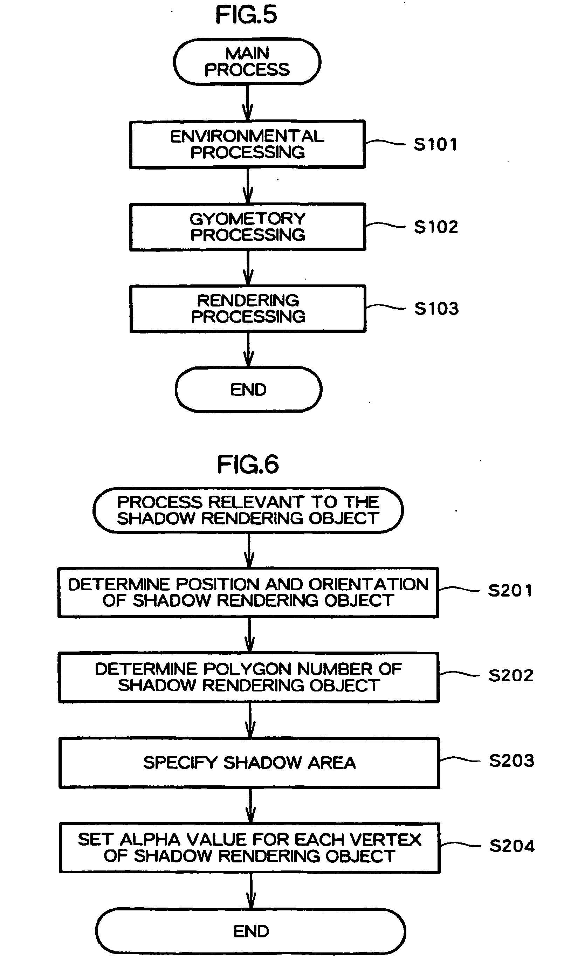

Fig. 5 is a flowchart of a main process to be carried out in the game machine 10 for every predetermined period of time (every 1/60th of a second, for example). The shown process is realized by the microprocessor 14 by carrying out a program read from the DVD-ROM 25. As shown, in the game machine 10, environmental processing is initially carried out (S101). In the environmental processing, the positions and postures of all static and moving objects in the virtual three dimensional space 40 are calculated. A static object includes an object, such as a building or the like, whose position remains the same, while a moving object includes an object, such as a character object 44, or a target to be operated by the player, whose position and/or posture is changed.

In the environmental processing, the position, orientation, and angle of view of the virtual camera 46 are calculated. For example, the position (viewpoint coordinates) of the virtual camera 46 is determined based on the position of the character object 44 which is the target of operation by the player, so as to move according to movement of the character object 44. Also, the orientation (the sight line direction) of the virtual camera 46, for example, is determined so as to be directed to the representative point of the character object 44 which is the target of operation by the player. Further, the angle of view may have a fixed value, for example.

Thereafter, in the game machine 10, geometry processing is carried out (S102). In the geometry processing, coordinate conversion from the world coordinate system (XW, YW, ZW) to the viewpoint coordinate system, that is, a coordinate system having the viewpoint coordinates as the origin, is carried out. Further, color information about the vertex of the polygon forming each object is calculated based on the information (color and position of the light source 48) about the light source 48. Still further, clipping processing is carried out.

Thereafter, rendering processing is carried out in the game machine 10 (S103). Specifically, the microprocessor 14 forwards the vertex coordinates, vertex color information, texture coordinates, and so forth of each polygon within the image capturing range of the virtual camera 46 to the image processing unit 16, which in turn forms a game screen image in the VRAM, based on the information. The image is formed by converting the respective objects described in the viewpoint coordinate system into those described in the screen coordinate system. The thus formed image in the VRAM is output to the monitor 18 at a predetermined timing.

Fig. 6 is a flowchart showing a process that is particularly relevant to the shadow rendering object 50. This process is carried out as a part of the environmental processing (S101) and geometry processing (S102), for example. This process is carried out for each object having a shadow (character object 44).

As shown in the drawing, in the process relevant to the shadow rendering object 50, the position and orientation of the shadow rendering object 50 is determined (S201). The position of the shadow rendering object 50 is determined such that the position of the representative vertex P0 of the shadow rendering object 50 coincides with the foot position F of the character object 44. The orientation of the shadow rendering object 50 is determined such that the reference direction of the shadow rendering object 50 coincides with the direction from the position L, where the position of the light source 48 is orthogonally projected onto the field object 42, to the foot position F of the character object 44.

Thereafter, the number of polygons forming the shadow rendering object 50 is determined (S202). Here, initially, the distance between the character object 44 and the virtual camera 46 is obtained. Then, while referring to the polygon number control table (Fig. 4), the values of the division numbers nx and ny corresponding to the range which includes the obtained distance are obtained. As described above, the division numbers of the shadow rendering object 50 for the x and Y axial directions (see Fig. 3), respectively, are determined, and the number of polygons forming the shadow rendering object 50 is accordingly determined.

Then, a shadow area in the shadow rendering object 50 is specified (S203). Specifically, the shadow area in the shadow rendering object 50 is calculated according to a publicly known algorithm, such as shadow volume and so forth, for example, based on the position and orientation of the shadow rendering object 50, determined at S201, the position of the light source 48, the position and shape data of the character object 44, and so forth.

Thereafter, the alpha values of the respective vertexes of the polygons forming the shadow rendering object 50 are set (S204). That is, for each of the vertexes of the polygons forming the shadow rendering object 50, whether or not the vertex is located within the shadow area is determined, and an alpha value of the vertex is set based on the determination result. In this embodiment, the alpha value of a vertex within the shadow area is set as 255, while that of a vertex outside the shadow area is set as 0.

As described above, in the game machine 10, a picture in which the light from the light source 48 causes the shadow 45 of the character object 44 on the field object 42, and the shadow 45 varies according to a change in the position of the light source 48, the state of the character object 44, and so forth, is displayed. The above described shadow rendering can be attained using the field object 42 divided into fine polygons. However, this has a problem on that is results in a huge amount of data about the field object 42. The game machine 10 addresses this point by expressing the above described shadow while suppressing an increase in the data amount.

In the game machine 10, the number of polygons forming the shadow rendering object 50 (in other words, the fineness of the polygons forming the shadow rendering object 50) is changed based on the distance between the character object 44 and the virtual camera 46. This arrangement enables the above described shadow rendering in the game machine 10, while reducing a processing load.

When the light source 48 is located at a low position (that is, small YW axial coordinates), the shadow 45 of the character object 44 may be formed too long to be fully included in the shadow rendering object 50. In such a case, the shadow 45 of the character object 44 appears incomplete, which may give the player some sense of discomfort.

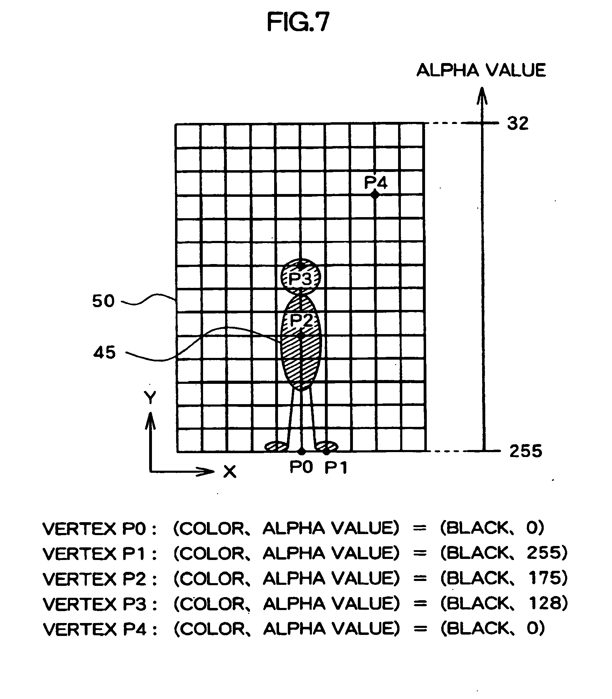

To address the above, the alpha value of a vertex within the shadow area of the shadow rendering object 50 may be determined based on the distance from the character object 44, rather than as a fixed value (255, for example). For example, as shown in Fig. 7, the alpha value of a vertex within the shadow area of the shadow rendering object 50 may be determined so as to become smaller in a gradual or stepwise manner from a predetermined maximum value (255 in the example shown in Fig. 7) to a predetermined minimum value (32 in the example shown in Fig. 7) as the vertex goes farther away from the character object 44. This arrangement enables the shadow 45 of the character object 44 shown by gradation on the game screen. That is, the shadow 45 of the character object 44 is shown in a tone which becomes lighter in a gradual or stepwise manner going away from the character object 44. As a result, the shadow 45 of the character object 44 appears more blurred going away from the character object 44. This arrangement enables expression of the shadow 45 so as not to give a sense of discomfort to the player, even when the shadow 45 of the character object 44 cannot be shown complete within the shadow rendering object 50. It should be noted that in this case, the color (brightness) of the vertex within the shadow area of the shadow rendering object 50 may be changed in a gradual or stepwise manner as the shadow 45 goes away from the position of the character object 44 such that the shadow 45 of the character object 44 is shown by gradation on the game screen.

Alternatively, the length (the length in the Y axial direction in Fig. 3) of the shadow rendering object 50 may be changed based on the height (the YW axial coordinates) of the light source 48. That is, the shadow rendering object 50 having a length in accordance with the height of the light source 48 may be placed in the virtual three dimensional space 40. For example, a table which shows the correspondence between the range of the height of the light source 48 and the length of the shadow rendering object 50 may be stored, and the length of the shadow rendering object 50 may be determined referring to the table. Alternatively, the length of the shadow rendering object 50 may be determined through a predetermined calculation based on the height of the light source 48, for example. This arrangement can prevent the shadow 45 of the character object 44 from becoming too long to be fully included in the shadow rendering object 50, and thus giving the player the above described sense of discomfort.

It should be noted that the present invention is not limited to the above described embodiment.

For example, two or more shadow rendering objects 50 may be provided with respect to one character object 44. For example, in the case where two or more light sources 48 are set in the virtual three dimensional space 40 and two or more shadows are accordingly formed with respect to one character object 44, a shadow rendering object 50 corresponding to each of the light sources 48 may be provided based on the positions of the light source 48 and the character object 44.

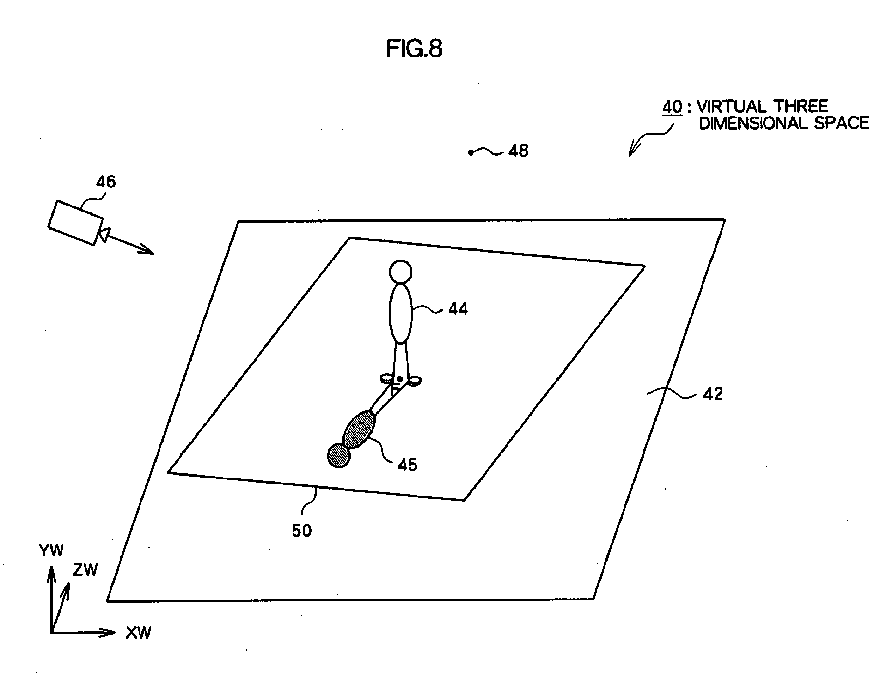

Alternatively, the shadow rendering object 50 such as is shown in Fig. 8, for example, may be provided, though this results in a larger shadow rendering object 50 compared to that in the above-described embodiment. That is, a shadow rendering object 50 which can cover the entire area within a predetermined distance from the position of the character object 44 is provided such that the foot position F of the character object 44 coincides with the center of the shadow rendering object 50. With the above, even though change in the position of the light source 48 results in change in the relative positional relation between the light source 48 and the character object 44, the position where to place the shadow rendering object 50 need not be changed. As a result, the position of the light source 48 need not be considered in determining a position at which to place the shadow rendering object 50.

Further, in order to cope with a case in which a plurality of character objects 44 having different heights (the length in the YW axial direction) are placed in the virtual three dimensional space 40, the length (the length in the Y axial direction in Fig. 3) of the shadow rendering object 50 may be stored in association with each character object 44. With the above, the length of the shadow rendering object 50 may be changed for each character object 44 according to the length of the character object 44. Alternatively, a table which shows the correspondence between the range of the height of the character object 44 and the length of the shadow rendering object 50 may be stored, and the length of the shadow rendering object 50 is changed for each character object 44 according to the height of the character object 44 with reference to the table.

It should be noted that an object which has a shadow to be formed is not limited to the character object 44, and any other kinds of objects, including a static object, such as a building or the like, can be similarly applicable.

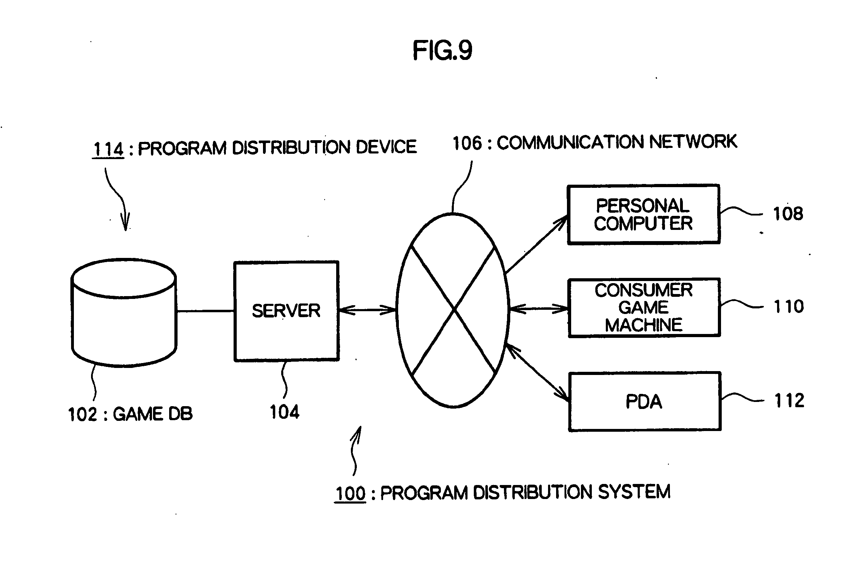

Further, although it is described in the above that a program is supplied from a DVD-ROM 25, or an information storage medium, to the consumer game machine 11, the program may alternatively be distributed via a communication network to a home or the like. Fig. 9 is a diagram showing an overall structure of a program distribution system using a communication network. Referring to Fig. 9, a program distribution method according to the present invention will be described. As shown, the program distribution system 100 comprises a game database 102, a server 104, a communication network 106, a personal computer 108, a consumer game machine 110, and a PDA (personal digital assistant) 112. The game database 102 and the server 104 together constitute a program distribution device 114. The communication network 106 comprises the Internet, a cable television network, or the like, for example. In this system, a program having the content identical to that stored in the DVD-ROM 25 is stored in the game database (an information storage medium) 102. A person wishing to obtain a game sends a game distribution request via the personal computer 108, the consumer game machine 110, the PDA 112, or the like, which is then transmitted via the communication network 106 to the server 104. Then, the server 104, in response to the game distribution request, reads the program from the game database 102, and sends the program read to the entity having requested the game distribution, such as the personal computer 108, the consumer game machine 110, the PDA 112, or the like. It should be noted that although it is arranged here that a game is distributed in response to a game distribution request, the server 104 may unidirectionally sends a game. Further, simultaneous distribution of all program components necessary to realize a game (collective distribution) is unnecessary, and distribution of only a component necessary in each aspect of the game (dividing distribution) is applicable instead. The above described game distribution via the communication network 106 makes it possible for a person wishing to obtain the program to readily obtain the desired program.

## Claims

1. A game machine for showing a game screen image showing a picture obtained by viewing, from a predetermined viewpoint (46), a virtual three dimensional space where a light source (48), a first object (42), and a second object (44) located on the first object (42) are placed, comprising:
shadow rendering object placing means (16) for placing a shadow rendering object (50) for rendering a shadow (45) of the second object (44) over a part of the first object (42), the part being determined based on the position of the second object (44);
means for specifying a shadow area on the shadow rendering object (50) where the shadow (45) of the second object (44) is to be rendered, based on a position of the light source (48), a position of the second object (44), and shape data about the second object (44);
alpha value determination means;
display control means (16) for producing the game screen image, based on the alpha value determined by the alpha value determination means (16), and displaying;
**characterized by**
means for setting the colours of respective vertexes of polygons forming the shadow rendering object (50) as black;
means for determining, for each of vertexes of polygons forming the shadow rendering object (50), whether or not the vertex is located within the shadow area specified based on the position of the light source (48), the position of the second object (44), and the shape data about the second object (44);
wherein the alpha value determination means (16) determine an alpha value of each of vertexes of polygons forming the shadow rendering object (50), based on whether or not the vertex is located within the shadow area specified based on the position of the light source (48), the position of the second object (44), and the shape data about the second object (44);
and wherein the alpha value of a vertex within the shadow area of the shadow rendering object (50) is determined based on the distance from the second object (44).

2. The game machine according to claim 1, wherein the shadow rendering object placing means (16) places the shadow rendering object (50), based on the position of the light source (48) and the position of the second object (44).

3. The game machine according to claim 1 or 2, wherein the alpha value determination means (16) includes means for determining the brightness of each of the vertexes of the polygons forming the shadow rendering object (50), based on a distance between the vertex and the position of the second object (44).

4. The game machine according to claim 1 or 2, wherein the shadow rendering object placing means (16) changes a size of the shadow rendering object (50), based on the position of the light source (48) and the position of the second object (44).

5. A control method for controlling a game machine for showing a game screen image showing a picture obtained by viewing, from a predetermined viewpoint (46), a virtual three dimensional space where a light source (48), a first object (42), and a second object (44) located on the first object (42) are placed, comprising:
a shadow rendering object (50) placing step of placing a shadow rendering object (50) for rendering a shadow (45) of the second object (44) so as to overlap a part of the first object (42), the part being determined based on the position of the second object (44);
a step of specifying a shadow area on the shadow rendering object (50) where the shadow (45) of the second object (44) is to be rendered, based on a position of the light source (48), a position of the second object (44), and shape data about the second object (44);
an alpha value determination step;
a display control step of producing the game screen image based on the alpha value determined at the alpha value determination step, and displaying;
**characterized by**
a step of setting the colours of respective vertexes of polygons forming the shadow rendering object (50) as black;
a step of determining, for each of vertexes of polygons forming the shadow rendering object (50), whether or not the vertex is located within the shadow area specified based on the position of the light source (48), the position of the second object (44), and the shape data about the second object (44);
wherein the alpha value determination step determines an alpha value of each of vertexes of polygons forming the shadow rendering object (50), based on whether or not the vertex is located within the shadow area specified based on the position of the light source (48), the position of the second object (44), and the shape data about the second object (44),
and wherein the alpha value of a vertex within the shadow area of the shadow rendering object (50) is determined based on the distance from the second object (44).

6. A computer readable information storage medium storing a program causing a computer to perform the method of claim 5.

## Patentansprüche

1. Spielmaschine zur Darstellung eines Spiel-Bildschirmbildes, das ein Bild zeigt, das durch Betrachtung eines virtuellen dreidimensionalen Raums, in dem eine Lichtquelle (48), ein erstes Objekt (42) und ein zweites Objekt (44), das an dem ersten Objekt (42) angeordnet ist, positioniert sind, von einem vorbestimmten Betrachtungspunkt (46) aus erhalten ist, mit:
einer Schattenrendering-Objekt-Platzierungseinrichtung (16) für die Platzierung eines Schattenrenderingobjekts (50) für die Renderung eines Schattens (45) des zweiten Objekts (44) über einem Teil des ersten Objekts (42), wobei der Teil auf der Basis der Position des zweiten Objekts (44) determiniert ist;
einer Einrichtung für die Spezifizierung eines Schattenbereichs an dem Schattenrederingobjekt (50), an dem der Schatten (45) des zweiten Objekts (44) zu rendern ist, und zwar basierend auf einer Position der Lichtquelle (48), einer Position des zweiten Objekts (44), und Formdaten über das zweite Objekt (44);
einer Alphawert-Bestimmungseinrichtung;
einer Anzeigesteuereinrichtung (16) für die Erzeugung des Spiel-Bildschirmbildes auf der Basis des Alphawerts, der durch die Alphawert-Bestimmungseinrichtung (16) bestimmt ist, und für die Anzeige;
**gekennzeichnet durch**
eine Einrichtung zum Festlegen der Farben von jeweiligen Ecken von Polygonen, die das Schattenrenderingobjekt (50) bilden, als schwarz;
eine Einrichtung für die Bestimmung bezüglich jeder der Ecken von Polygonen, die das Schattenrenderingobjekt (50) bilden, ob die Ecke innerhalb des Schattenbereichs angeordnet ist oder nicht, der auf der Basis der Position der Lichtquelle (48), der Position des zweiten Objekts (44) und den Formdaten um das zweite Objekt (44) herum spezifiziert ist;
wobei die Alphawert-Bestimmungseinrichtung (16) einen Alphawert von jeder der Ecken der Polygone, die das Schattenrenderingobjekt (50) bilden, auf der Basis dessen bestimmt, ob die Ecke innerhalb des Schattenbereichs, der auf der Basis der Position der Lichtquelle (48), der Position des zweiten Objekts (44) und den Formdaten über das zweite Objekt (44) spezifiziert ist, positioniert ist oder nicht;
und wobei der Alphawert einer Ecke innerhalb des Schattenbereichs des Schattenrenderingobjekts (50) auf der Basis des Abstands von dem zweiten Objekt (44) bestimmt ist.

2. Spielmaschine nach Anspruch 1, bei der die Schattenrendering-Objekt-Platzierungseinrichtung (16) das Schattenrenderingobjekt (50) auf der Basis der Position der Lichtquelle (48) und der Position des zweiten Objekts (44) platziert.

3. Spielmaschine nach Anspruch 1 oder 2, bei der die Alphawert-Bestimmungseinrichtung (16) eine Einrichtung zum Bestimmen der Helligkeit von jeder der Ecken der Polygone, die das Schattenrenderingobjekt (50) bilden, auf der Basis eines Abstands zwischen der Ecke und der Position des zweiten Objekts (44) enthält.

4. Spielmaschine nach Anspruch 1 oder 2, bei der die Schattenrenderingobjekt-Platzierungseinrichtung (16) eine Größe des Schattenrenderingobjekts (50) auf der Basis der Position der Lichtquelle (48) und der Position des zweiten Objekts (44) ändert.

5. Steuerverfahren zum Steuern einer Spielmaschine für die Darstellung eines Spielbildschirmbilds, der ein Bild anzeigt, das durch Betrachtung von einem vorbestimmten Betrachtungspunkt (46) eines virtuellen dreidimensionalen Raums, in dem eine Lichtquelle (48), ein erstes Objekt (42) und ein zweites Objekt (44), das an dem ersten Objekt (42) positioniert ist, angeordnet sind, erhalten ist, mit:
einem ein Schattenrenderingobjekt (50) anordnenden Schritt zur Platzierung eines Schattenrenderingobjekts (50) für die Renderung eines Schattens (45) des zweiten Objekts (44) derart, dass ein Teil des ersten Objekts (42) überlappt wird, wobei der Teil auf der Basis der Position des zweiten Objekts (44) bestimmt wird;
einem Schritt des Spezifizierens eines Schattenbereichs an dem Schattenrenderingobjekt (50), an dem der Schatten (45) des zweiten Objekts (44) zu rendern ist, und zwar auf der Basis einer Position der Lichtquelle (48), einer Position des zweiten Objekts (44) und von Formdaten über das zweite Objekt (44);
einem Alphawert-Bestimmungsschritt;
einem Anzeigesteuerschritt für die Erzeugung des Spielbildschirmbilds auf der Basis des Alphawerts, der bei dem Alpahwert-Bestimmungsschritt determiniert wurde, und für die Anzeige;
**gekennzeichnet durch**
einen Schritt des Festlegens der Farben von jeweiligen Ecken von Polygonen, die das Schattenrenderingobjekt (50) bilden, als schwarz;
einen Schritt der Bestimmung für jede der Ecken von Polygonen, die das Schattenrenderingobjekt (50) bilden, ob die Ecke innerhalb des spezifizierten Schattenbereichs lokalisiert ist, und zwar basierend auf der Position der Lichtquelle (48), der Position des zweiten Objekts (44) und den Formdaten über das zweite Objekt (44);
wobei der Alphawert-Bestimmungsschritt einen Alphawert von jeder der Ecken von Polygonen, die das Schattenrenderingobjekt (50) bilden, auf der Basis dessen bestimmt, ob die Ecke innerhalb des Schattenbereichs lokalisiert ist, der auf der Basis der Position der Lichtquelle (48), der Position des zweiten Objekts (44) und den Formdaten über das zweite Objekt (44) spezifiziert ist,
und wobei der Alphawert einer Ecke innerhalb des Schattenbereichs des Schattenrenderingobjekts (50) auf der Basis des Abstands von dem zweiten Objekt (44) bestimmt wird.

6. Computerlesbares Informationsspeichermedium, das ein Programm speichert, das einen Computer zur Ausführung des Verfahrens gemäß Anspruch 5 veranlasst.

## Revendications

1. Machine de jeux destinée à représenter une image d'écran de jeu représentant une image obtenue en regardant, depuis un point de vue prédéterminé (46), un espace tridimensionnel virtuel où une source de lumière (48), un premier objet (42), et un second objet (44) situé sur le premier objet (42) sont placés, comprenant :
un moyen de placement d'objet de rendu d'ombre (16) destiné à placer un objet de rendu d'ombre (50) pour rendre une ombre (45) du second objet (44) sur une partie du premier objet (42), la partie étant déterminée en se basant sur la position du second objet (44) ;
un moyen de spécification de zone d'ombre sur l'objet de rendu d'ombre (50) où l'ombre (45) du second objet (44) doit être rendue, en se basant sur une position de la source de lumière (48), une position du second objet (44), et des données de forme concernant le second objet (44) ;
un moyen de détermination de valeur alpha ;
un moyen de commande d'affichage (16) destiné à produire l'image d'écran de jeu, en se basant sur la valeur alpha déterminée par le moyen de détermination de valeur alpha (16), et à l'afficher ;
**caractérisée par**
un moyen destiné à régler les couleurs de sommets respectifs de polygones formant l'objet de rendu d'ombre (50) sur le noir ;
un moyen destiné à déterminer, pour chacun des sommets des polygones formant l'objet de rendu d'ombre (50), si le sommet est situé ou non à l'intérieur de la zone d'ombre spécifiée en se basant sur la position de la source de lumière (48), la position du second objet (44), et les données de forme concernant le second objet (44) ;
dans laquelle le moyen de détermination de valeur alpha (16) détermine une valeur alpha de chacun des sommets de polygones formant l'objet de rendu d'ombre (50), en se basant sur le fait que le sommet est situé ou non à l'intérieur de la zone d'ombre spécifiée en se basant sur la position de la source de lumière (48), la position du second objet (44), et les données de forme concernant le second objet (44) ;
et dans lequel la valeur alpha d'un sommet à l'intérieur de la zone d'ombre de l'objet de rendu d'ombre (50) est déterminée en se basant sur la distance par rapport au second objet (44).

2. Machine de jeux selon la revendication 1, dans laquelle le moyen de placement d'objet de rendu d'ombre (16) place l'objet de rendu d'ombre (50), en se basant sur la position de la source de lumière (48) et la position du second objet (44).

3. Machine de jeux selon la revendication 1 ou 2, dans laquelle le moyen de détermination de valeur alpha (16) comprend un moyen destiné à déterminer la luminosité de chacun des sommets des polygones formant l'objet de rendu d'ombre (50), en se basant sur une distance entre le sommet et la position du second objet (44).

4. Machine de jeux selon la revendication 1 ou 2, dans laquelle le moyen de placement d'objet de rendu d'ombre (16) change une dimension de l'objet de rendu d'ombre (50) en se basant sur la position de la source de lumière (48) et la position du second objet (44).

5. Procédé de commande destiné à commander une machine de jeux afin de représenter une image d'écran de jeu représentant une image obtenue en regardant, depuis un point de vue prédéterminé (46), un espace tridimensionnel virtuel où une source de lumière (48), un premier objet (42), et un second objet (44) situé sur le premier objet (42) sont placés, comprenant :
une étape de placement d'objet de rendu d'ombre (50) destinée à placer un objet de rendu d'ombre (50) pour rendre une ombre (45) du second objet (44) de façon à chevaucher une partie du premier objet (42), la partie étant déterminée en se basant sur la position du second objet (44) ;
une étape de spécification d'une zone d'ombre sur l'objet de rendu d'ombre (50) où l'ombre (45) du second objet (44) doit être rendue, en se basant sur une position de la source de lumière (48), une position du second objet (44), et des données de forme concernant le second objet (44) ;
une étape de détermination de valeur alpha ;
une étape de commande d'affichage destinée à produire l'image d'écran de jeu, en se basant sur la valeur alpha déterminée dans l'étape de détermination de valeur alpha, et à l'afficher ;
**caractérisé par**
une étape de réglage des couleurs de sommets respectifs de polygones formant l'objet de rendu d'ombre (50) sur le noir ;
une étape de détermination, pour chacun des sommets des polygones formant l'objet de rendu d'ombre (50), si le sommet est situé ou non à l'intérieur de la zone d'ombre spécifiée en se basant sur la position de la source de lumière (48), la position du second objet (44), et les données de forme concernant le second objet (44) ;
dans lequel l'étape de détermination de valeur alpha détermine une valeur alpha de chacun des sommets de polygones formant l'objet de rendu d'ombre (50), en se basant sur le fait que le sommet est situé ou non à l'intérieur de la zone d'ombre spécifiée en se basant sur la position de la source de lumière (48), la position du second objet (44), et les données de forme concernant le second objet (44) ;
et dans lequel la valeur alpha d'un sommet à l'intérieur de la zone d'ombre de l'objet de rendu d'ombre (50) est déterminée en se basant sur la distance par rapport au second objet (44).

6. Support de stockage d'informations lisible sur ordinateur stockant un programme amenant un ordinateur à réaliser le procédé de la revendication 5.
